# EUROPEAN PATENT APPLICATION

(11) **EP 4 160 941 A1**
(43) Date of publication of application: **05.04.2023**
(21) Application number: 21306349.8
(22) Date of filing: 29.09.2021
(51) Int. Cl.: H04B 10/071, H04B 10/297

(54) **DISTRIBUTED SENSING AND MONITORING USING AMPLIFIED OPTICAL LINKS**

(71) Applicant: Alcatel Submarine Networks, 91620 Nozay (FR)
(72) Inventor: BRENNE, Jan Kristoffer, 7048 Trondheim (NO)
(74) Representative: Loyer & Abello

(57) **Abstract**

Example embodiments enable distributed fiber-optic sensing and monitoring using amplified optical links by providing wavelength-selective optical loopback paths in the optical repeaters thereof. Different ones of the optical repeaters may have wavelength-selective optical loopback paths corresponding to different respective wavelengths. In such embodiments, wavelength-division multiplexing can be used to enable independent interrogation of different sections of optical fiber by different optical-fiber interrogators operating at different respective wavelengths of probe light. In some embodiments, the probe light can be wavelength-division multiplexed with data-bearing optical signals. Both terrestrial and submarine applications of the disclosed distributed fiber-optic sensing and monitoring are possible.

## Description

### BACKGROUND

### Field

Various example embodiments relate to optical metrology and, more specifically but not exclusively, to distributed sensing and monitoring using optical fibers.

### Description of the Related Art

This section introduces aspects that may help facilitate a better understanding of the disclosure. Accordingly, the statements of this section are to be read in this light and are not to be understood as admissions about what is in the prior art or what is not in the prior art.

Optical fibers can be used as distributed sensors. Demonstrated applications of such sensors include but are not limited to detection and/or mapping of ambient disturbances, such as earthquakes, naturally occurring or man-induced mechanical vibrations, lightning strikes, etc. Such applications may include both marine and terrestrial applications. Example marine applications relate to protection and/or monitoring of submarine assets, such as telecom cables.

### SUMMARY OF SOME SPECIFIC EMBODIMENTS

Example embodiments enable distributed fiber-optic sensing and monitoring using amplified optical links by providing wavelength-selective optical loopback paths in the optical repeaters thereof. Different ones of the optical repeaters may have wavelength-selective optical loopback paths corresponding to different respective wavelengths. In such embodiments, wavelength-division multiplexing can be used to enable independent interrogation of different sections of optical fiber by different optical fiber interrogators operating at different respective wavelengths of probe light. In some embodiments, the probe light can be wavelength-division multiplexed with data-bearing optical signals. Both terrestrial and submarine applications of the disclosed distributed fiber-optic sensing and monitoring are possible.

Some embodiments may be advantageous for sensing and/or monitoring along lines, not used for optical data communications, e.g., gas and/or oil pipe lines, and power lines and/or cables, e.g., power cables connecting off-shore wind farms to terrestrial resources. Some embodiments may be used to monitor terrestrial lines, e.g., to monitor overhead power lines for damage from harsh weather or to monitor the structural-health of bridges and dams etc., or to monitor border or perimeter-security protection networks or lines.

According to an example embodiment, provided is an apparatus, comprising a first optical repeater that comprises: a first optical amplifier in a first optical path through the first optical repeater to amplify wavelength-division-multiplexed optical channels transmitted in a first direction; a second optical amplifier in a second optical path through the first optical repeater to amplify wavelength-division-multiplexed optical channels transmitted in a second direction, the second direction being opposite to the first direction; and a wavelength-selective optical pathway between the first and second optical paths to enable light of a selected first wavelength channel of the wavelength-division-multiplexed optical channels traveling through the first optical path in the second direction to cross into the second optical path and travel therein in the second direction.

According to another example embodiment, provided is an apparatus, comprising: a plurality of optical fiber interrogators, each of the optical fiber interrogators to transmit a respective optical probe signal through a segment of a fiber-optic cable and to receive a corresponding backscattered optical response signal through the segment, both the respective optical probe signal and the corresponding backscattered optical response signal being on a respective channel of a plurality of wavelength-division-multiplexed optical channels; and an optical repeater that comprises: a first optical amplifier in a first optical path through the optical repeater to amplify the wavelength-division-multiplexed optical channels transmitted in a first direction, the first optical path being end-connected to a first optical fiber of the segment; a second optical amplifier in a second optical path through the optical repeater to amplify the wavelength-division-multiplexed optical channels transmitted in a second direction, the second optical path being end-connected to a second optical fiber of the segment, the second direction being opposite to the first direction; and a wavelength-selective optical pathway between the first and second optical paths to enable light of a selected first wavelength channel of the wavelength-division-multiplexed optical channels traveling through the first optical path in the second direction to cross into the second optical path and travel therein in the second direction.

### BRIEF DESCRIPTION OF THE DRAWINGS

Other aspects, features, and benefits of various disclosed embodiments will become more fully apparent, by way of example, from the following detailed description and the accompanying drawings, in which:
FIG. 1 shows a block diagram of an apparatus for distributed optical sensing according to an embodiment;
FIG. 2 shows a block diagram of an optical fiber interrogator that can be used in the apparatus of FIG. 1 according to an embodiment;
FIG. 3 shows a block diagram of an example specific embodiment of the apparatus of FIG. 1;
FIG. 4 shows a block diagram of an optical repeater that can be used in the apparatus of FIG. 1 according to an alternative embodiment;
FIG. 5 shows a block diagram of an optical repeater that can be used in the apparatus of FIG. 1 according to another alternative embodiment;
FIGs. 6A-6B show block diagrams of example alternative embodiments of a wavelength-selective optical loopback path that can be used in the optical repeaters shown in FIGs. 3-5;
FIG. 7 shows a block diagram of an apparatus for distributed optical sensing according to another embodiment;
FIG. 8 shows a block diagram of an optical communication system according to an embodiment; and
FIG. 9 shows a block diagram of an optical repeater that can be used in the optical communication system of FIG. 8 according to an embodiment.

### DETAILED DESCRIPTION

Although some example embodiments are described herein below in reference to submarine optical fibers and/or submarine fiber-optic cables, a person of ordinary skill in the art will readily understand, based on the provided description, how to make and use corresponding embodiments that employ terrestrial optical fibers and/or terrestrial fiber-optic cables.

Some embodiments may rely on optical time-domain reflectometry (OTDR) techniques, such as Rayleigh-scattering-based OTDR, Brillouin-scattering-based OTDR, etc. The Rayleigh-scattering-based OTDR may include, e.g., phase-sensitive or coherent OTDR, polarization-resolved OTDR, etc. The general physical principles of different types of OTDR measurements are reviewed, e.g., in Xiaoyi Bao and Liang Chen, "Recent Progress in Distributed Fiber Optic Sensors," Sensors, 2012, vol. 12, pp. 8601-8639, which is incorporated herein by reference in its entirety. Some other embodiments may rely on interferometric techniques, e.g., based on a Michelson interferometer, a Mach-Zehnder interferometer (MZI), a Sagnac interferometer, or some combination thereof.

Some embodiments relate to distributed acoustic sensing (DAS). In a conventional optical DAS system, the interrogated length of optical fiber may be disadvantageously limited by the optical-power budget available to the optical DAS interrogator, with the typical optical-DAS reach being several hundred kilometers or less, e.g., <300 km. In addition, when the interrogated length of optical fiber is relatively large, the DAS-system performance may be degraded by the corresponding constraints on the sampling frequency. For example, for sequential sampling of points on the length of optical fiber, the time between such sequential samplings would typically be larger than the round-trip time of the probe light through the lengths being sampled, thereby reducing the obtainable sampling rate. Furthermore, optical DAS may be difficult to implement in telecom fiber-optic links employing conventional bidirectional optical repeaters, e.g., due to the relatively high optical loss of the loopback paths provided by such repeaters. In the relevant literature, such loopback paths may typically be referred to as high-loss loopback (HLLB) paths.

Similar problems may also be encountered in the implementation of other optical-fiber-based distributed-sensing techniques, e.g., distributed temperature sensing (DTS), distributed strain sensing (DSS), and distributed temperature and strain sensing (DTSS).

At least some of the above-indicated problems in the state of the art can beneficially be addressed using at least some embodiments disclosed herein. An example embodiment relies on wavelength-division multiplexing/demultiplexing and low-loss, wavelength-selective optical loopback paths in optical repeaters to enable independent interrogation of different sections of optical fiber by different optical-fiber interrogators operating at different respective wavelengths of probe light. Example benefits and advantages of this solution are explained in more detail below in reference to several specific embodiments.

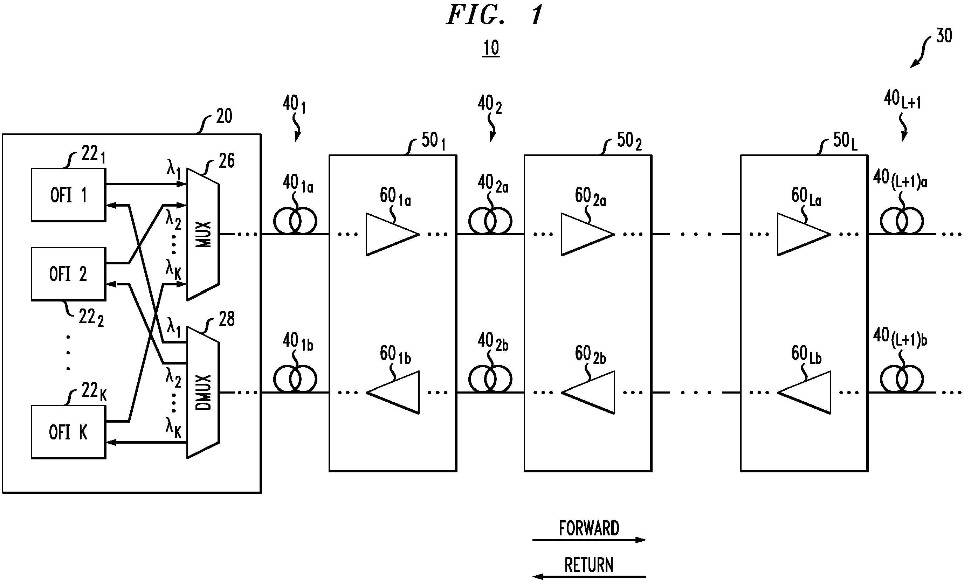

FIG. 1 shows a block diagram of an apparatus **10** for distributed optical sensing according to an embodiment. Apparatus **10** comprises an optical terminal **20** connected to an optical cable system **30.** Cable system **30** comprises bidirectional optical repeaters **50₁**-**50_{L}** serially connected by spans **40** of optical fiber as indicated in FIG. 1, where L is a positive integer. In the shown embodiment, each fiber-optic span **40ᵢ** includes at least two optical fibers, which are labeled **40ᵢₐ** and **40_{ib}**, respectively, where i=1, 2, ..., L+1. The number L of optical repeaters **50** in cable system **30** depends on the particular embodiment and can be in the range, e.g., from 1 to -100. A typical length of a fiber span **40ᵢ** may range from ~1 km to -100 km. Some implementations of apparatus **10** may enable non-sequential or temporally overlapping sampling of an optical fiber cable using different wavelengths of probe light, e.g., as explained below.

An optical repeater **50ⱼ** comprises all-optical amplifiers **60ⱼₐ** and **60_{jb}**, i.e., optical amplifiers without optical-to-electrical or electrical-to-optical conversions. Here, j=1, 2, .., L. All-optical amplifier **60ⱼₐ** is configured to all-optically amplify optical signals traveling away from optical terminal **20.** Herein below, this particular signal-propagation direction may be referred to as the "forward" direction. All-optical amplifier **60_{jb}** is similarly configured to all-optically amplify optical signals traveling toward optical terminal **20.** Herein below, the latter signal-propagation direction may be referred to as the "return" direction. The forward and return directions are also indicated in FIG. 1 by the correspondingly labeled arrows.

In an example embodiment, an all-optical amplifier **60ⱼ** can be implemented as known in the pertinent art, e.g., using an erbium-doped fiber, a gain-flattening filter, and one or more laser-diode pumps. The laser diodes can be powered by a DC current from the corresponding power-feeding equipment (PFE, not explicitly shown in FIG. 1), fed through the electrical conductor(s) of the corresponding fiber-optic cable, which also includes optical fibers **40ᵢₐ** and **40_{ib}**. In some embodiments, the electrical conductors (e.g., wires) may be located near the center of the fiber-optic cable. In some other embodiments, the electrical conductors may have a generally tubular shape, e.g., with a ring-like cross-section in a plane orthogonal to the longitudinal axis of the fiber-optic cable.

In an alternative embodiment, optical repeaters **50ⱼ** can be designed for two, three, four, or more pairs of optical fibers **40ᵢₐ/40_{ib}** connected thereto at each side thereof. For example, an optical repeater **50ⱼ** designed to be compatible with a four-fiber-pair fiber-optic cable typically includes eight all-optical amplifiers **60** arranged in four amplifier pairs, each pair being similar to the pair of all-optical amplifiers **60ⱼₐ** and **60_{jb}** explicitly shown in FIG. 1.

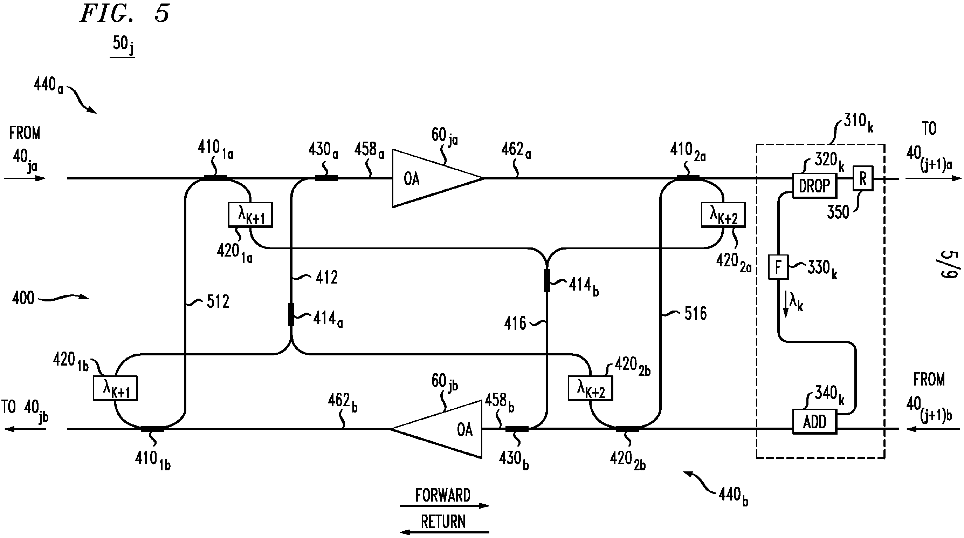

An optical repeater **50ⱼ** may further comprise at least one of: (i) a low-loss, wavelength-selective optical loopback path, e.g., **310ₖ**, FIG. 5; (ii) a supervisory optical circuit, e.g., **400,** FIG. 5; and (iii) a high-loss loopback (HLLB) path, e.g., **512, 516,** FIG. 5.

When present, a wavelength-selective optical loopback path of optical repeater **50ⱼ** is configured to cause light of a selected wavelength travelling in the return direction through optical fiber **40₍ⱼ₊₁₎ₐ** to be dropped therefrom and cross into optical fiber **40_{jb}**. In an example embodiment, the wavelength-selective optical loopback paths of different optical repeaters **50ⱼ** may be configured to select different respective wavelengths of light for such dropping and crossing. Each of the wavelength-selective optical loopback paths is designed to have a relatively low optical insertion loss (e.g., <1 dB) near the selected wavelength while substantially rejecting other wavelengths. Depending on the embodiment, the 3-dB spectral width of the pass band of such wavelength-selective optical loopback path can be in the range, e.g., between -500 GHz and -10 GHz.

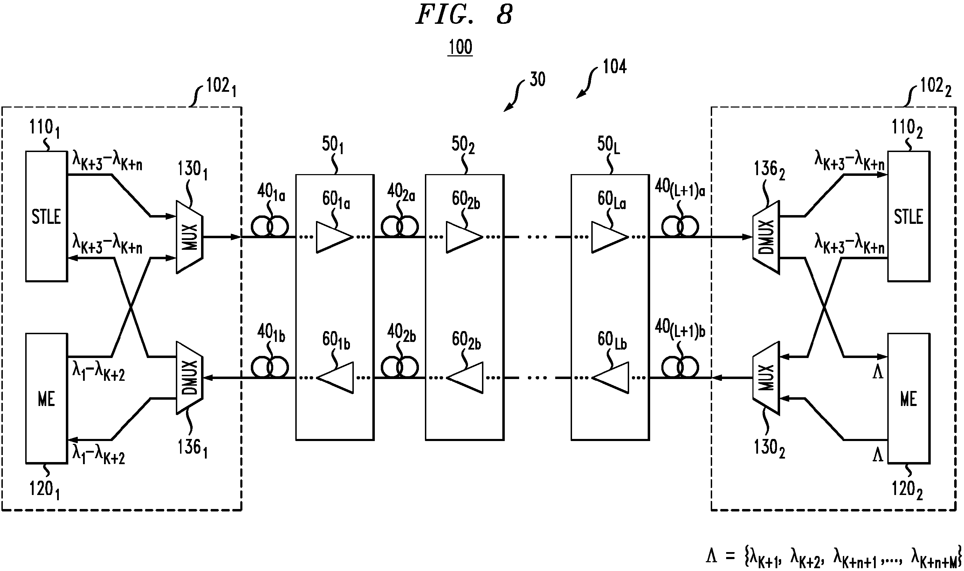

When present, a supervisory optical circuit of optical repeater **50ⱼ** enables the corresponding monitoring equipment (ME, not explicitly shown in FIG. 1; see, e.g., FIG. 8) to monitor the operating status of optical amplifiers **60ⱼₐ** and **60_{jb}** of that optical repeater.

Two types of HLLB paths may be used in optical repeater **50ⱼ**. Depending on the embodiment, optical repeater **50ⱼ** may have: (i) only one HLLB path, which can be either of the first type or of the second type; or (ii) two HLLB paths, one of which is of the first type and the other one is of the second type. When present, an HLLB path of the first type is configured to cause a portion (e.g., <5%) of light travelling in the return direction through optical fiber **40₍ⱼ₊₁₎ₐ** to cross into optical fiber **40_{jb}**. When present, an HLLB path of the second type is similarly configured to cause a portion of light travelling in the forward direction through optical fiber **40_{jb}** to cross into optical fiber **40₍ⱼ₊₁₎ₐ**. Either type of HLLB paths is broadband, i.e., is not wavelength selective. Herein, the term "broadband" should be interpreted to mean a spectral bandwidth greater than 500 GHz.

In some embodiments, some of optical repeaters **50ⱼ** may not provide any deliberate (e.g., non-parasitic) optical coupling between the forward and return optical paths. For example, such an optical repeater **50ⱼ** may not have any of the above-mentioned wavelength-selective optical loopback path, supervisory optical circuit, and HLLB paths.

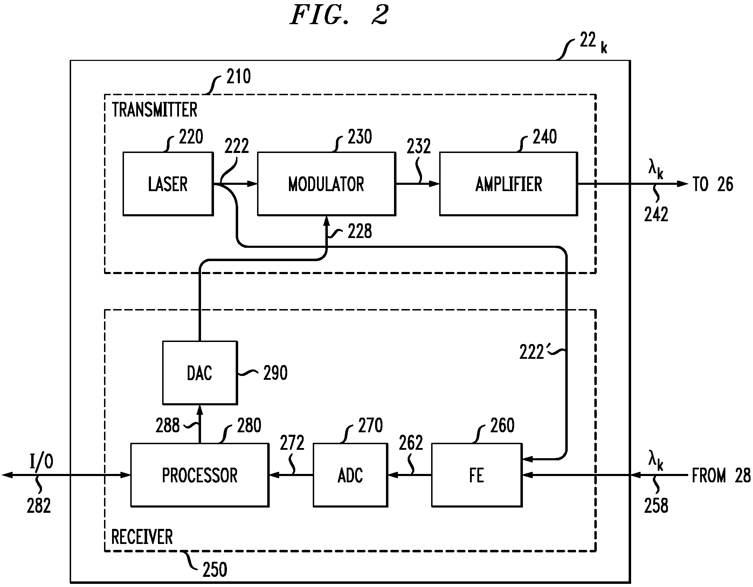

Optical terminal **20** comprises optical fiber interrogators (OFIs) **22₁-22_{K},** an optical wavelength multiplexer (MUX) **26,** and an optical wavelength demultiplexer (DMUX) **28** connected as indicated in FIG. 1. Each OFI **22ₖ** is configured to operate at a different respective wavelength λₖ, where k=1, 2, ..., K. In an example embodiment, the wavelengths λ₁-λ_{K} are within the optical-gain band of optical amplifiers 60. The number K typically satisfies the inequality 2≤K≤L+1. In some embodiments, the number K may also satisfy the inequality K≤10. An example embodiment of OFI **22ₖ** is described in more detail below in reference to FIG. 2.

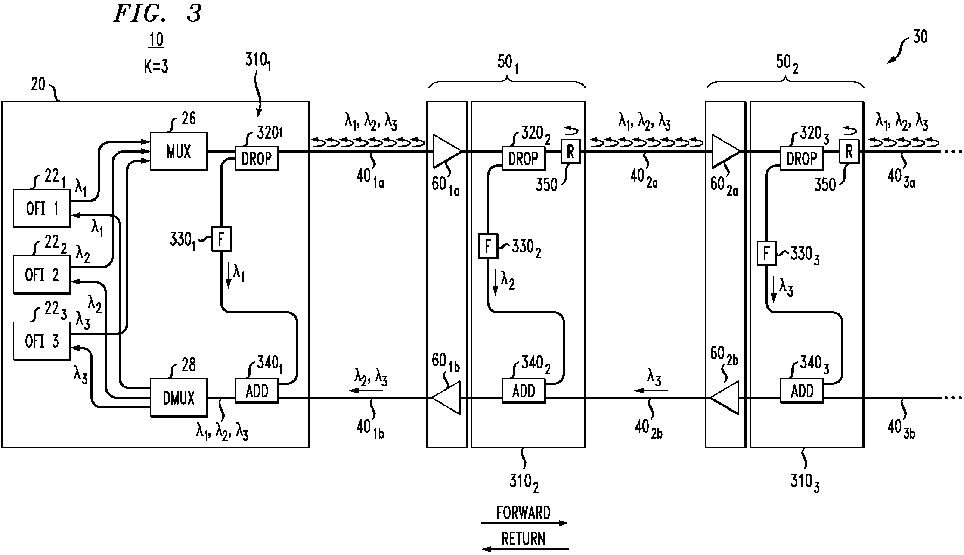

In an example embodiment, the operating wavelengths λ₁-λ_{K} of OFIs **22₁-22_{K}** are selected to be within the optical pass bands of the wavelength-selective optical loopback paths of different ones of optical repeaters **50ⱼ**. This configuration advantageously enables each of OFIs **22₁-22_{K}** to interrogate only a corresponding single one of the fiber-optic spans **40ᵢ**, e.g., as described in more detail below in reference to FIG. 3.

In operation, each individual one of OFIs **22₁-22_{K}** generates optical probe signals having a respective one of carrier wavelengths λ₁-λ_{K} and applies those optical probe signals to MUX **26.** MUX **26** wavelength-multiplexes the different-wavelength, optical probe signals received from the set of OFIs **22₁-22_{K}** and directs the resulting wavelength-multiplexed optical probe signal to optical fiber **40₁ₐ**, which then further directs that signal in the forward direction through the optical cable system **30.** The optical probe signals of different wavelengths cause optical cable system **30** to generate the corresponding optical response signals of the same wavelengths travelling in the return direction. Each of those optical response signals can cross from the forward path of optical cable system **30,** through the respective one of the above-mentioned wavelength-selective optical loopback paths of optical repeaters **50ⱼ**, into the return path of the optical cable system and arrive at DMUX **28.** DMUX **28** then wavelength-demultiplexes the received optical response signals and applies the resulting demultiplexed signals of wavelengths λ₁-λ_{K} to OFIs **22₁**-**22_{K}**, respectively. Each of the OFIs **22₁-22_{K}** then operates to detect and process the respective received optical response signal, e.g., as known in the pertinent art, to obtain therefrom the intended information about the corresponding one of the fiber-optic spans **40ᵢ**.

FIG. 2 shows a block diagram of an example optical fiber interrogator (OFI) **22ₖ** according to an embodiment. In this particular embodiment, OFI **22ₖ** is configured to perform distributed optical fiber sensing (DOFS), e.g., DAS measurements. In some embodiments, OFI **22ₖ** may be configured to perform OTDR measurements and/or interferometric measurements, e.g., as known in the pertinent art. In some embodiments, OFI **22ₖ** may additionally or alternatively be configured to perform other types of DOFS, such as DTS, DSS, and/or DTSS measurements.

As shown in FIG. 2, OFI **22ₖ** comprises an optical transmitter **210** and an optical receiver **250.** Optical transmitter **210** comprises a laser **220,** an optical modulator **230,** and an optional optical amplifier **240.** In some embodiments, the output wavelength of laser **220** may be tunable. Optical receiver **250** comprises an electro-optical front end (FE) **260,** an analog-to-digital converter (ADC) **270,** a processor **280,** and a digital-to-analog converter (DAC) **290.**

In operation, laser **220** generates an output light beam **222** having wavelength λₖ. A portion **222'** (e.g., <10% or <30% of the optical power) of light beam **222** is directed to electro-optical front end **260** of receiver **250,** and the remainder of the light beam **222** is directed to optical modulator **230.** Optical modulator **230** modulates the received light in response to an electrical drive signal **228** received from DAC **290,** thereby generating a modulated optical signal **232.** Optical amplifier **240** amplifies optical signal **232,** thereby generating an amplified optical signal **242,** which is then directed to MUX **26** (also see FIG. 1). Optical signal **242** is an example of one of the above-mentioned optical probe signals.

DAC **290** generates electrical drive signal **228** in response to a digital signal **288** received from processor **280.** In an example embodiment, digital signal **288** is such that optical signal **232** is a pulsed optical signal suitable for DOFS measurements. In some embodiments, digital signal **288** is configured to cause optical signal **232** to have a waveform that facilitates DOFS measurements, e.g., in terms of achieving a specified signal-to-noise ratio (SNR) and/or a specified spatial resolution for such DOFS measurements. In some cases, digital signal **288** may be configured to make optical signal **232** suitable for an application of matched-filtering techniques in the processing of the corresponding optical response signal **258.**

Electro-optical front end **260** receives optical response signal **258** from DMUX **28** (also see FIG. 1) and operates to convert this signal into one or more corresponding electrical signals **262.** In the shown example embodiment, electro-optical front end **260** is configured for coherent detection of optical response signal **258** by optically mixing this signal, as known in the pertinent art, with portion **222'** of light beam **222.** The corresponding hardware of electro-optical front end **260** may include an optical hybrid and one or more photodetectors (e.g., photodiodes; not explicitly shown in FIG. 2). ADC **270** operates to convert the one or more electrical signals **262** generated by electro-optical front end **260** into the corresponding one or more streams **272** of digital samples. Digital samples **272** are then processed in processor **280** using a suitable signal-processing algorithm to obtain measurements of a selected characteristic of the corresponding fiber-optic span **40ᵢ**. In various embodiments, such a characteristic may be used to detect the presence of mechanical vibrations, fiber faults, localized strain, localized temperature excursions, etc. An input/output (I/O) port **282** may be used to export the measurement results and to receive instructions from an external controller, e.g., for configuration changes of OFI **22ₖ**.

FIG. 3 shows a block diagram of an embodiment of apparatus **10** (FIG. 1) corresponding to K=3. In this particular embodiment, optical terminal **20** comprises three OFIs (labeled **22₁, 22₂,** and **22₃**) configured to operate at wavelengths λ₁-λ₃, respectively. Optical terminal **20** of FIG. 3 further comprises a low-loss, wavelength-selective optical loopback path **310₁**. In addition to the above-described optical amplifiers **60₁ₐ** and **60_{1b}**, optical repeater **50₁** comprises a low-loss, wavelength-selective optical loopback path **310₂.** In addition to the above-described optical amplifiers **60₂ₐ** and **60_{2b}**, optical repeater **50₂** comprises a low-loss, wavelength-selective optical loopback path **310₃**. Optical loopback paths **310₁-310₃** are configured for wavelengths λ₁-λ₃, respectively.

Optical loopback path **310₁** is connected between the optical output port of MUX **26** and the optical input port of DMUX **28** and comprises a wavelength-drop demultiplexer **320₁**, an optional narrow band-pass optical filter (NBPOF) **330₁,** and a wavelength-add multiplexer **340₁**.

Drop demultiplexer **320₁** has different characteristics for light propagating in the forward and return directions. For the forward direction, drop demultiplexer **320₁** allows to pass therethrough, with little or no attenuation, any optical signals of wavelengths λ₁-λ₃. For the return direction, drop demultiplexer **320₁** allows optical signals of wavelengths λ₂ and λ₃ to pass through while directing optical signals of wavelength λ₁ through the drop port thereof toward add multiplexer **340₁**. Depending on the embodiment, the spectral width of the drop band of drop demultiplexer **320₁** can be in the range, e.g., between -500 GHz and ~10 GHz.

When present, NBPOF **330₁** operates to improve the rejection of wavelengths λ₂ and λ₃ by optical loopback path **310₁**. In an example embodiment, NBPOF **330₁** can be similar to the NBPOFs disclosed in U.S. Patent No. 11,095,370, which is incorporated herein by reference in its entirety.

Add multiplexer **340₁** operates to add the optical signals of wavelength λ₁ received from the drop port of drop demultiplexer **320₁** to the optical signals passing therethrough in the return direction. The resulting optical signal is then directed to the input port of DMUX **28.** In some embodiments, add multiplexer **340₁** can be implemented using a copy of the same optical circuit that is used to implement drop demultiplexer **320₁**. In such embodiments, the same one of the optical ports of such optical circuit can be used as the above-mentioned drop port if the circuit is used as drop demultiplexer **320₁** or as the above-mentioned add port if the circuit is used as add multiplexer **340₁**.

Optical loopback path **310₂** is connected between the optical output port of optical amplifier **60₁ₐ** and the optical input port of optical amplifier **60_{1b}** and comprises a wavelength-drop demultiplexer **320₂**, an optional NBPOF **330₂**, and a wavelength-add multiplexer **340₂**. These elements of optical loopback path **310₂** are generally analogous to the corresponding elements of optical loopback path **310₁**, but are designed for adding/dropping the wavelength λ₂.

More specifically, for the forward direction, drop demultiplexer **320₂** allows to pass therethrough, with little or no attenuation, any optical signals of wavelengths λ₁-λ₃. For the return direction, drop demultiplexer **320₂** allows optical signals of wavelengths λ₁ and λ₃ to pass through while directing optical signals of wavelength λ₂ through the drop port thereof toward add multiplexer **340₂**. When present, NBPOF **330₂** operates to improve the rejection of wavelengths λ₁ and λ₃ by optical loopback path **310₂**. Add multiplexer **340₂** operates to add the optical signals of wavelength λ₂ received from the drop port of drop demultiplexer **320₂** to the optical signals passing therethrough in the return direction. The resulting optical signal is then directed to the input port of optical amplifier **60_{1b}**. In some embodiments, add multiplexer **340₂** can be implemented using a copy of the same optical circuit that is used to implement drop demultiplexer **320₂**.

Optical loopback path **310₃** is connected between the optical output port of optical amplifier **60₂ₐ** and the optical input port of optical amplifier **60_{2b}** and comprises a wavelength-drop demultiplexer **320₃,** an optional NBPOF **330₃**, and a wavelength-add multiplexer **340₃**. These elements of optical loopback path **310₃** are generally analogous to the corresponding elements of optical loopback path **310₂**, but are designed for adding/dropping wavelength λ₃.

More specifically, for the forward direction, drop demultiplexer **320₃** allows to pass therethrough, with little or no attenuation, any optical signals of wavelengths λ₁-λ₃. For the return direction, drop demultiplexer **320₃** allows optical signals of wavelengths λ₁ and λ₂ to pass through while directing optical signals of wavelength λ₃ through the drop port thereof toward add multiplexer **340₃**. When present, NBPOF **330₃** operates to improve the rejection of wavelengths λ₁ and λ₂ by optical loopback path **310₃.** Add multiplexer **340₃** operates to add the optical signals of wavelength λ₃ received from the drop port of drop demultiplexer **320₃** to the optical signals passing therethrough in the return direction. The resulting optical signal is then directed to the input port of optical amplifier **60_{2b}**. In some embodiments, add multiplexer **340₃** can be implemented using a copy of the same optical circuit that is used to implement drop demultiplexer **320₃**.

In some embodiments, optical repeaters **50₁** and **50₂** may include partial reflectors 350 inserted, as indicated in FIG. 3, into the forward optical path thereof. In an example embodiment, a reflector **350** may be a broadband reflector, i.e., may not be wavelength selective. In an alternative embodiment, a reflector **350** may be wavelength selective, e.g., implemented using a fiber Bragg grating (FBG). In an example embodiment, reflector **350** is a weak reflector having a reflectivity in the range, e.g., between 10⁻⁴ and 10⁻⁵. The back reflections of the optical probe signals generated by partial reflectors **350** can be used for system-calibration purposes, e.g., to more-precisely mark the locations of optical repeaters **50₁** and **50₂** on the finite impulse response of optical cable system **30** and/or to enable pre-compensation of the optical probe signals for possible signal distortions introduced by optical amplifiers **60ⱼ**.

In operation, optical signals of wavelengths λ₁-λ₃ can be routed through apparatus **10** of FIG. 3, for example, as follows. The optical probe signals (e.g., **242ₖ**, FIG. 2; k=1, 2, 3) generated in optical terminal **20** by OFIs **22₁, 22₂,** and **22₃** are launched in the forward direction and sequentially propagate through optical fibers **40₁ₐ, 40₂ₐ,** and **40₃ₐ**. In each of these fibers, the optical probe signals may undergo back scattering and/or reflections to produce light traveling in the return direction. Optical loopback path **310₃** causes the light of wavelength λ₃ that is back-scattered/reflected in optical fiber **40₃ₐ** to cross to the optical input port of optical amplifier **60_{2b}** and then be launched through the return optical path toward DMUX **28** of optical terminal **20.** Due to the above-described spectral characteristics, optical loopback path **310₃** prevents light of wavelengths λ₁ and λ₂ that is back-scattered/reflected in optical fiber **40₃ₐ** from crossing therethrough to the optical input port of optical amplifier **60_{2b}**. Optical loopback path **310₂** causes the light of wavelength λ₂ that is back-scattered/reflected in optical fiber **40₂ₐ** to cross to the optical input port of optical amplifier **60_{1b}** and then be launched through the return optical path toward DMUX **28** of optical terminal **20.** Due to the above-described spectral characteristics, optical loopback path **310₂** prevents light of wavelengths λ₁ and λ₃ that is back-scattered/reflected in optical fiber **40₂ₐ** from crossing therethrough to the optical input port of optical amplifier **60_{1b}**. Optical loopback path **310₁** causes the light of wavelength λ₁ that is back-scattered/reflected in optical fiber **40₁ₐ** to cross to the optical input port of DMUX **28.** Due to the above-described spectral characteristics, optical loopback path **310₁** prevents light of wavelengths λ₂ and λ₃ that is back-scattered/reflected in optical fiber **40₁ₐ** from crossing therethrough to the optical input port of DMUX **28.**

Due to the above-described optical-signal routing implemented in apparatus **10,** probe light of different individual ones of wavelengths λ₁-λ₃ causes individual ones of OFIs **22₁, 22₂,** and **22₃** to receive back-scattered/reflected light originated primarily from different respective individual (e.g., single) fiber-optic sections. More specifically, OFI **22₁** receives back-scattered/reflected light of wavelength λ₁ originated primarily from optical fiber **40₁ₐ**. OFI **22₂** receives back-scattered/reflected light of wavelength λ₂ originated primarily from optical fiber **40₂ₐ**. OFI **22₃** receives back-scattered/reflected light of wavelength λ₃ originated primarily from optical fiber **40₃ₐ**. As a result, each of OFIs **22₁, 22₂,** and **22₃,** in effect, operates to interrogate a corresponding single one of the fiber-optic sections **40ᵢ** while being substantially optically isolated from interrogating the other fiber-optic sections. Thus, apparatus **10** substantially dedicates individual ones of OFIs **22₁, 22₂,** and **22₃** to different individual fiber-optic sections. This particular feature advantageously enables apparatus **10,** e.g., to have a longer reach than a comparable conventional fiber-interrogation system and/or to have more-relaxed constraints on the sampling frequency of the optical probe signals.

In an alternative embodiment, optical loopback path **310₁** can be modified as follows: (i) the add multiplexer **340₁** is removed; and (ii) the input port of OFI **22₁** is disconnected from DMUX **28** and is instead directly connected to NBPOF **330₁**. In this manner, light of wavelength λ₁ from the drop port of drop demultiplexer **320₁** can bypass DMUX **28** en route to the input port of OFI **22₁**.

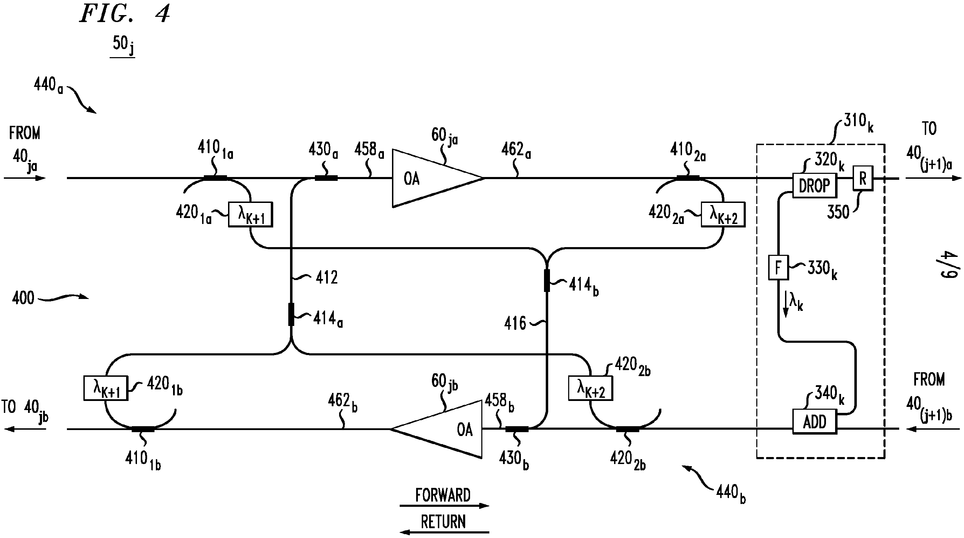

FIG. 4 shows a block diagram of an optical repeater **50ⱼ** that can be used in apparatus **10** according to an alternative embodiment. Optical repeater **50ⱼ** is configured for being connected between fiber-optic sections **40ⱼ** and **40ⱼ₊₁** as indicated in FIG. 4. As already indicated above, fiber-optic section **40ⱼ** comprises optical fibers **40ⱼₐ** and **40_{jb}**. Fiber-optic section **40ⱼ₊₁** similarly comprises optical fibers **40₍ⱼ₊₁₎ₐ** and **40_{(j+1)b}**.

As shown in FIG. 4, optical repeater **50ⱼ** comprises optical amplifiers (OAs) **60ⱼₐ** and **60_{jb}** and optical loopback path **310ₖ** connected and configured, e.g., as explained in reference to the corresponding elements shown in FIG. 3. In particular, optical loopback path **310ₖ** is configured for one wavelength λₖ (where k can be 1, 2, ..., or K). Optical repeater **50ⱼ** further comprises an optical supervisory circuit **400** configured to provide optical loopback paths for the supervisory optical signals of carrier wavelengths λ_{K+1} and λ_{K+2}. In an example embodiment, the wavelengths λ_{K+1} and λ_{K+2} are different from and represent different optical channels than any of the wavelengths λ₁-λ_{K}. Circuit **400** can be implemented, e.g., as a planar lightwave circuit (PLC).

In operation, circuit **400** can route supervisory optical signals of wavelengths λ_{K+1} and λ_{K+2}, for example, as follows.

A portion of a supervisory optical signal of wavelength λ_{K+2} received from optical fiber **40ⱼₐ** can be looped back into optical fiber **40_{jb}**, e.g., as follows. Optical path **440ₐ** directs the optical signal received through optical fiber **40ⱼₐ** to optical amplifier **60ⱼₐ**, where the latter undergoes optical amplification. The resulting amplified signal is directed from output port **462ₐ** of optical amplifier **60ⱼₐ** to optical coupler **410₂ₐ**. Optical coupler **410₂ₐ** operates to cause the coupled optical signal to be directed through NBPOF **420₂ₐ** that passes the λ_{K+2} channel thereof and essentially stops all other spectral channels thereof. The filtered λ_{K+2} channel is coupled by optical coupler **414_{b}** into an optical fiber (or optical waveguide) **416** that directs it to input port **458_{b}** of optical amplifier **60_{jb}** by way of optical coupler **430_{b}**. The corresponding amplified signal of wavelength λ_{K+2} is then directed from output port **462_{b}** of optical amplifier **60_{jb}** to optical fiber **40_{jb}**.

A portion of a supervisory optical signal of wavelength λ_{K+1} received from optical fiber **40_{(j+1)b}** can be looped back into optical fiber **40**_{**(j+1)a**,} e.g., as follows. Optical path **440_{b}** directs the optical signal received through optical fiber **40_{(j+1)b}** to optical amplifier **60_{jb}**, where the latter undergoes optical amplification. The resulting amplified signal is directed from output port **462_{b}** of optical amplifier **60_{jb}** to optical coupler **410_{1b}.** Optical coupler **410_{1b}** operates to cause the coupled optical signal to be directed through NBPOF **420_{1b}** that passes the λ_{K+1} channel thereof and essentially stops all other spectral channels thereof. The filtered λ_{K+1} channel is coupled by optical coupler **414ₐ** into optical fiber (or optical waveguide) **412** that directs it to input port **458ₐ** of optical amplifier **60ⱼₐ** by way of optical coupler **430ₐ**. The corresponding amplified signal of wavelength λ_{K+1} is then directed from output port **462ₐ** of optical amplifier **60ⱼₐ** to optical fiber **40₍ⱼ₊₁₎ₐ**.

A portion of a supervisory optical signal of carrier wavelength λ_{K+1} received from optical fiber **40ⱼₐ** can be looped back into optical fiber **40_{jb}**, e.g., as follows. Optical path **440ₐ** directs the optical signal received through optical fiber **40ⱼₐ** to optical coupler **410₁ₐ**. Optical coupler **410₁ₐ** operates to cause the coupled optical signal to be directed through NBPOF **420₁ₐ** that passes the λ_{K+1} channel thereof and essentially stops all other spectral channels thereof. The filtered λ_{K+1} channel is coupled by optical coupler **414_{b}** into optical fiber **416,** which directs it to input port **458_{b}** of optical amplifier **60_{jb}** by way of optical coupler **430_{b}**. The corresponding amplified signal of wavelength λ_{K+1} is then directed from output port **462_{b}** of optical amplifier **60_{jb}** to optical fiber **40_{jb}**.

A portion of a supervisory optical signal of carrier wavelength λ_{K+2} received from optical fiber **40_{(j+1)b}** can be looped back into optical fiber **40₍ⱼ₊₁₎ₐ**, e.g., as follows. Optical path **440_{b}** directs the optical signal received through optical fiber **40_{(j+1)b}** to optical coupler **410_{2b}**. Optical coupler **410_{2b}** operates to cause the coupled optical signal to be directed through NBPOF **420_{2b}** that passes the λ_{K+2} channel thereof and essentially stops all other spectral channels thereof. The filtered λ_{K+2} channel is coupled by optical coupler **414ₐ** into optical fiber **412,** which directs it to input port **458ₐ** of optical amplifier **60ⱼₐ** by way of optical coupler **430ₐ.** The corresponding amplified signal of wavelength λ_{K+2} is then directed from output port **462ₐ** of optical amplifier **60ⱼₐ** to optical fiber **40₍ⱼ₊₁₎ₐ**.

Example supervisory optical circuits that can be used as alternative embodiments of circuit **400** are disclosed, e.g., in European Patent Application Nos. EP17305569.0, EP17305570.8, and EP18306007.8, all of which are incorporated herein by reference in their entirety.

FIG. 5 shows a block diagram of an alternative embodiment of optical repeater **50ⱼ**. The embodiment of FIG. 5 differs from the embodiment of FIG. 4 in that the embodiment of FIG. 5 additionally includes HLLB optical paths **512** and **516.** As already, indicated above, HLLB optical paths **512** and **516** are not wavelength-selective, i.e., can pass light of substantially any wavelength used in apparatus **10.** HLLB optical paths **512** and **516** are "high loss" paths due to the relatively small coupling coefficients of optical couplers **410₁ₐ, 410₂ₐ, 410_{1b},** and **410_{2b},** to which these paths are end-connected.

HLLB optical paths **512** and **516** can route the backscattered light of substantially any wavelength, for example, as follows.

The backscattered light received from optical fiber **40₍ⱼ₊₁₎ₐ** can cross from optical path **440ₐ** to optical path **440_{b}** by first being coupled by optical coupler **410₂ₐ** into optical fiber (or optical waveguide) **516** and then being coupled by optical coupler **410_{2b}** out of optical fiber **516** and directed thereby to input port **458_{b}** of optical amplifier **60_{jb}**.

The backscattered light received from optical fiber **40_{jb}** can cross from optical path **440_{b}** to optical path **440ₐ** by first being coupled by optical coupler **410_{1b}** into optical fiber (or optical waveguide) **512** and then being coupled by optical coupler **410₁ₐ** out of optical fiber **512** and directed thereby to input port **458ₐ** of optical amplifier **60ⱼₐ**.

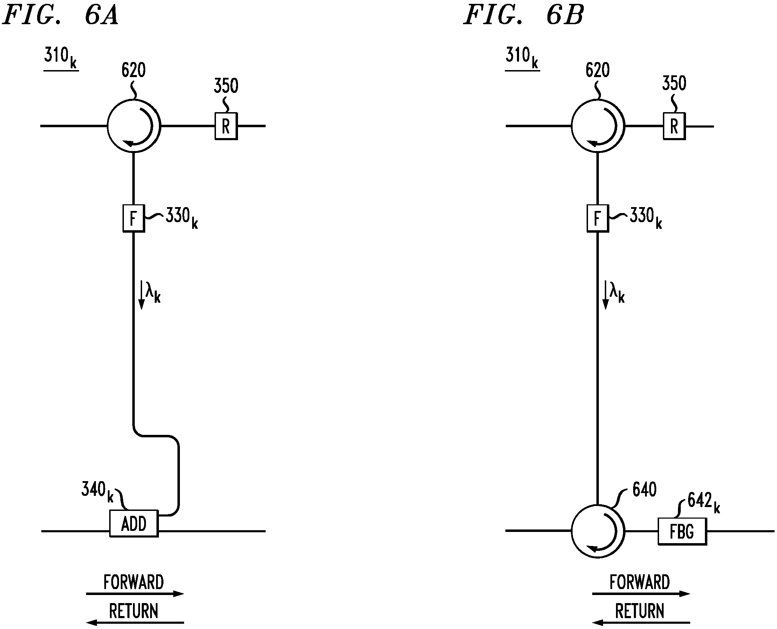

FIGs. 6A-6B show block diagrams of example alternative embodiments of optical loopback path **310ₖ**. The embodiment of FIG. 6A is a modification of the embodiment shown in FIGs. 3-5, wherein drop demultiplexer **320ₖ** is replaced by an optical circulator **620.** The embodiment of FIG. 6B is a further modification, wherein add multiplexer **340ₖ** is replaced by a combination of an optical circulator **640** and a fiber Bragg grating (FBG) **642ₖ**, with the FBG being configured for selectively reflecting light in a narrow spectral band near wavelength λₖ.

The spectral pass band of the optical loopback path **310ₖ** of FIGs. 3-5 has a spectral shape proportional to the product of the drop band of drop demultiplexer **320ₖ**, the pass band of NBPOF **330ₖ**, and the add band of add multiplexer **340ₖ**. In contrast, the spectral pass band of the optical loopback path **310ₖ** of FIG. 6A has a spectral shape proportional to the product of the pass band of NBPOF **330ₖ** and the add band of add multiplexer **340ₖ**. The spectral pass band of the optical loopback path **310ₖ** of FIG. 6B has a spectral shape proportional to the product of the pass band of NBPOF **330ₖ** and the reflection band of FBG **642ₖ**.

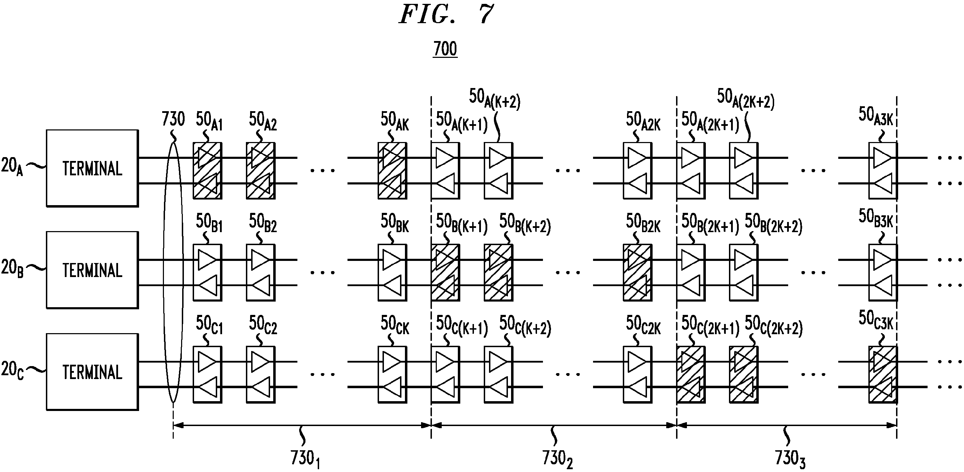

FIG. 7 shows a block diagram of an apparatus **700** for distributed optical sensing according to another embodiment. The structure and function of apparatus **700** can be better understood by noting that apparatus **700** comprises three instances of apparatus **10** (also see FIG. 1), wherein the optical fiber pairs corresponding to said three different instances are parts of the same fiber-optic cable, which is labeled **730** in FIG. 7. The optical terminals **20** (also see FIG. 1) corresponding to those three different instances of apparatus **10** are labeled as **20_{A}**, **20_{B}**, and **20_{C}**, respectively. A transverse cross-section of cable **730** intersects a fiber pair connected to optical terminal **20_{A}**, a fiber pair connected to optical terminal **20_{B}**, and a fiber pair connected to optical terminal **20_{C}.**

Cable **730** comprises three serially connected cable sections, labeled **730₁**, **730₂,** and **730₃**, respectively. Each of the cable sections **730₁**, **730₂,** and **730₃** has 3K bidirectional optical repeaters **50.** More specifically, cable section **730₁** has optical repeaters **50_{A1}-50_{AK}, 50_{B1}-50_{BK},** and **50_{C1}-50_{CK}.** Optical repeaters **50_{A1}-50_{AK}** are serially optically connected to optical terminal **20_{A}**. Optical repeaters **50_{B1}-50_{BK}** are serially optically connected to optical terminal **20_{B}**. Optical repeaters **50_{C1}-50_{CK}** are serially optically connected to optical terminal **20_{C}.** Cable section **730₂** has optical repeaters **50_{A(K+1)}-50_{A(2K)}**, **50_{B(K+1)}-50_{B(2K)}**, and **50_{C(K+1)}-50_{C(2K)}.** Optical repeaters **50**_{**A**(**K+1**)}**-50_{A(2K)}** are serially optically connected to optical terminal **20_{A}**. Optical repeaters **50_{B(K+1)}-50_{B(2K)}** are serially optically connected to optical terminal **20_{B}**. Optical repeaters **50_{C(K+1)}-50_{C(2K)}** are serially optically connected to optical terminal **20_{C}.** Cable section **730₃** has optical repeaters **50_{A(2K+1)}-50_{A(3K)}**, **50_{B(2K+1)}-50_{B(3K)}**, and **50_{C(2K+1)}-50_{C(3K)}**. Optical repeaters **50_{A(2K+1)}-50_{A(3K)}** are serially optically connected to optical terminal **20_{A}**. Optical repeaters **50_{B(2K+1)}-50_{B(3K)}** are serially optically connected to optical terminal **20_{B}**. Optical repeaters **50_{C(2K+1)}-50_{C(3K)}** are serially optically connected to optical terminal **20_{C}.**

Each of optical repeaters **50_{Ak}** includes a respective optical loopback path **310ₖ** (see, e.g., FIGs. 4-5), where k=1, 2, ..., K. Each of optical repeaters **50_{B(K+k)}** and **50_{C(2K+k)}** similarly includes a respective optical loopback path **310ₖ**. Optical repeaters **50_{B1}-50_{BK}**, **50_{C1}-50_{CK}**, **50_{A(K+1)}-50_{A(2K)}**, **50_{C(K+1)}-50_{C(2K)}**, **50_{A(2K+1)}-50_{A(3K)}**, and **50_{B(2K+1)}-50_{B(3K)}** do not have any optical loopback paths **310ₖ**. In FIG. 7, the optical repeaters 50 that include optical loopback paths **310ₖ** are indicated by cross-hatching.

Due to the above-described configuration of optical repeaters **50** in apparatus **700,** individual spans of cable **730** can be interrogated as follows. K individual spans of cable section **730₁** can be individually interrogated by the K OFIs **22₁-22_{K}** of optical terminal **20_{A}**. K individual spans of cable section **730₂** can be individually interrogated by the K OFIs **22₁-22_{K}** of optical terminal **20_{B}**. K individual spans of cable section **730₃** can be individually interrogated by the K OFIs **22₁-22_{K}** of optical terminal **20_{C}.** Thus, the interrogation reach of apparatus **700** is advantageously increased approximately threefold compared to that of apparatus **10** without an increase in the number K of wavelengths allocated to the various OFIs **22.**

Based on the example embodiment of FIG. 7, a person of ordinary skill in the pertinent art will readily understand how to make and use various alternative embodiments, in which different fiber pairs of a fiber-optic cable can be used to monitor different (e.g., non-overlapping) longitudinal sections of the cable. For example, different ones of such cable sections may not necessarily have the same number of optical repeaters therein. In some embodiments, some of such cable sections may be overlapping. In some embodiments, the number of fiber pairs of the cable connected to different respective optical terminals **20** may be different from three, etc.

FIG. 8 shows a block diagram of an optical communication system **100** according to an embodiment. In the shown embodiment, system **100** comprises landing stations **102₁** and **102₂** connected by way of a wet plant **104.** Landing stations **102₁** and **102₂** are typically further connected to respective terrestrial networks (not explicitly shown in FIG. 8). In an example embodiment, wet plant **104** comprises an undersea cable system that includes, *inter alia,* a submersible embodiment of optical cable system **30** (also see FIG. 1), wherein at least some of optical repeaters **50ⱼ** are implemented using optical repeaters **50ⱼ** of FIG. 4 or 5. In an alternative embodiment, system **100** may have additional landing stations connected to wet plant **104,** as known in the pertinent art, e.g., using one or more branching units (not explicitly shown in FIG. 8).

Landing station **102₁** comprises a monitoring equipment (ME) unit **120₁**. Landing station **102₂** comprises an ME unit **120₂**. In an example embodiment, each of ME units **120₁** and **120₂** may comprise a respective instance of optical terminal **20** (also see FIG. 1) configured, e.g., as explained below.

ME unit **120₁** may be configured to use wavelengths λ₁- λ_{K+2} to carry optical-probe signals and supervisory signals, which can be routed in optical cable system **30** of wet plant **104** as already described above. More specifically, wavelengths λ₁- λ_{K} can be used for fiber-interrogation purposes, and the wavelengths λ_{K+1} and λ_{K+2} can be allocated to supervisory optical signals.

Landing station **102₁** further comprises a submarine line terminal equipment (SLTE) unit **110₁**. SLTE unit **110₁** and ME unit **120₁** are connected to wet plant **104** by way of a wavelength MUX **130₁** and a wavelength DMUX **136₁** as indicated in FIG. 8. In an example embodiment, SLTE unit **110₁** includes a wavelength-division-multiplexing (WDM) optical data transceiver (not explicitly shown in FIG. 8) configured to transmit and receive payload-carrying optical data signals using carrier wavelengths λ_{K+3}-λ_{K+n}, where (n-2) is the number of WDM payload-data channels in system **100.** The number n can be in the range, e.g., between -10 and -150.

In operation, MUX **130₁** multiplexes the optical data signals of wavelengths λ_{K+3}-λ_{K+n} generated by SLTE unit **110₁** and the optical signals of wavelengths λ₁-λ_{K+2} generated by ME unit **120₁** and applies the resulting multiplexed optical signal to optical fiber **40₁ₐ**. DMUX **136₁** de-multiplexes a multiplexed optical signal received from optical fiber **40_{1b}** into two portions. The first portion has optical signals of carrier wavelengths λ_{K+3}-λ_{K+n} and is directed to SLTE unit **110₁**. The second portion has the looped-back optical signals of wavelengths λ₁-λ_{K+2} and is directed to ME unit **120₁**.

ME unit **120₂** may be configured to use wavelengths λ_{K+1}- λ_{K+2} to carry supervisory signals. ME unit **120₂** may further be configured to use wavelengths λ_{K+n+1}- λ_{K+n+M} for fiber-interrogation purposes. In some embodiments, the wavelength set λ_{K+n+1}- λ_{K+n+M} and the wavelength set λ₁- λ_{K} may have one or more wavelength in common. In some other embodiments, the wavelength set λ_{K+n+1}- λ_{K+n+M} and the wavelength set λ₁- λ_{K} may not have any common wavelengths, i.e., may be non-overlapping sets.

Landing station **102₂** comprises an SLTE unit **110₂**. SLTE unit **110₂** and ME unit **120₂** are connected to wet plant **104** by way of a wavelength MUX **130₂** and a wavelength DMUX **136₂** as indicated in FIG. 8. In an example embodiment, SLTE unit **110₂** includes a WDM optical data transceiver (not explicitly shown in FIG. 8) configured to transmit and receive payload-carrying optical data signals using carrier wavelengths λ_{K+3}-λ_{K+n}.

In operation, MUX **130₂** multiplesex the optical data signals of weavelengths λ_{K+3}-λ_{K+n} generated by SLTE unit **110₂** and the optical signals of wavelengths λ_{K+1}, λ_{K+2}, and λ_{K+n+1}- λ_{K+n+M} generated by ME unit **120₂** and applies the resulting multiplexed optical signal to optical fiber **40_{(L+1)b}**. DMUX **136₂** de-multiplexes a multiplexed optical signal received from optical fiber **40_{(L+1)a}** into two portions. The first portion has optical signals of carrier wavelengths λ_{K+3}-λ_{K+n} and is directed to SLTE unit **110₂**. The second portion has the looped-back optical signals of wavelengths λ_{K+1}, λ_{K+2}, and λ_{K+n+1}- λ_{K+n+M} and is directed to ME unit **120₂**.

In an example embodiment, carrier wavelengths λ₁-λ_{K+n+M} can be selected in accordance with a frequency (wavelength) grid, such as a frequency grid that complies with the ITU-T G.694.1 Recommendation, which is incorporated herein by reference in its entirety. The frequency grid used in system **100** can be defined, e.g., in the frequency range from about 184 THz to about 201 THz, with a 200, 100, 50, 25, or 12.5-GHz spacing of the channels therein. While typically defined in frequency units, the parameters of the grid can equivalently be expressed in wavelength units. For example, in the wavelength range from about 1528 nm to about 1568 nm, the 100-GHz spacing between the centers of neighboring WDM channels is equivalent to approximately 0.8-nm wavelength spacing. In alternative embodiments, other fixed or flexible (flex) frequency grids can be used as well.

Herein, the values of the indices 1, 2, ..., (K+n+M) do not necessarily represent the order in which the corresponding wavelengths λ₁-λ_{K+n+M} appear in the optical spectrum. For example, in some embodiments, the wavelengths λ₁-λ_{K+2} and the wavelengths λ_{K+3}-λ_{K+n+M} may be interleaved and/or interspersed in the optical spectrum in any convenient manner.

In various embodiments, each of landing stations **102₁** and **102₂** may further include one or more of the following conventional elements/components: (i) power feeding equipment; (ii) system supervisory equipment; (iii) network management equipment; (iv) cable termination boxes; (v) network protection equipment; and (vi) various interface circuits.

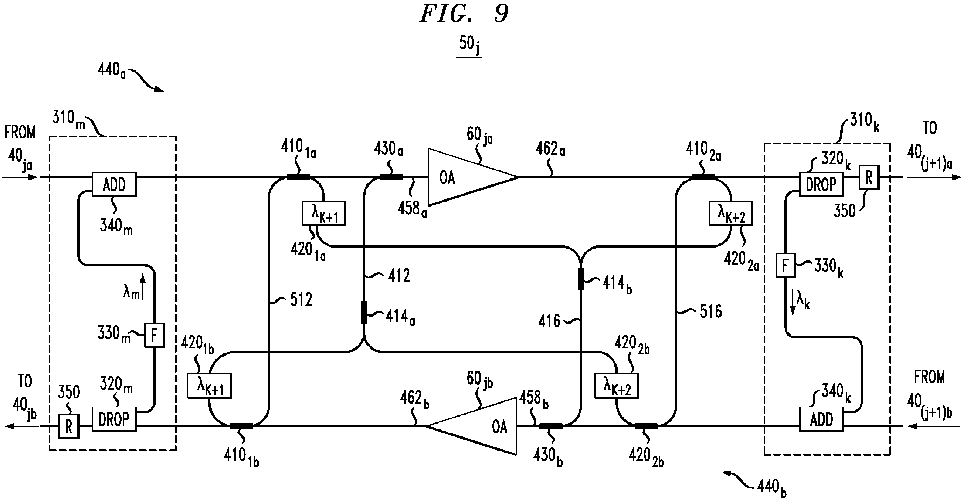

FIG. 9 shows a block diagram of an optical repeater **50ⱼ** that can be used in the optical communication system of FIG. 8 according to an embodiment. The embodiment of FIG. 9 differs from the embodiment of FIG. 5 in that the embodiment of FIG. 9 additionally includes an optical loopback path **310ₘ** optically connected as indicated in FIG. 9. Optical loopback path **310ₘ** is configured for wavelength λₘ that is different from wavelength λₖ.

In an example embodiment, the wavelength λₘ can be one of wavelengths λ_{K+n+1}-λ_{K+n+M}. In such an embodiment, optical loopback path **310ₘ** can be used to loop back optical response signals corresponding to the optical probe signal of wavelength λₘ transmitted by by ME unit **120₂**. As already indicated above, optical loopback path **310ₖ** can be used to loop back optical response signals corresponding to the optical probe signal of wavelength λₖ transmitted by ME unit **120₁**.

As used herein the term "narrow band-pass optical filter" (or "NBPOF") refers to an optical device that passes optical frequencies (wavelengths) within a certain relatively narrow range and rejects (or strongly attenuates) optical frequencies outside that range. The bandwidth B of the narrow band-pass optical filter is much smaller than any of the carrier frequencies that are being passed therethrough. For example, a center frequency of the pass band can be -200 THz, whereas the bandwidth B can be ~100 GHz or ~10 GHz, which is approximately three or four orders of magnitude smaller.

The planar-lightwave-circuit (PLC) technology enables telecom equipment manufacturers to produce narrow band-pass optical filters in large quantities and/or relatively inexpensively. There are many mature filter designs from which the manufacturer can choose for the intended application. In addition, a PLC-based narrow band-pass optical filter can be made tunable in a relatively straightforward manner, without an expensive and/or time-consuming redesign.

According to an example embodiment disclosed above, e.g., in the summary section and/or in reference to any one or any combination of some or all of FIGs. 1-9, provided is an apparatus, comprising a first optical repeater (e.g., **50ⱼ**, FIG. 4) that comprises: a first optical amplifier (e.g., **60ⱼₐ**, FIG. 4) in a first optical path through the first optical repeater to amplify wavelength-division-multiplexed optical channels transmitted in a first direction; a second optical amplifier (e.g., **60_{jb}** FIG. 4) in a second optical path through the first optical repeater to amplify wavelength-division-multiplexed optical channels transmitted in a second direction, the second direction being opposite to the first direction; and a wavelength-selective optical pathway (e.g., **310ₖ**, FIG. 4) between the first and second optical paths to enable light of a selected first wavelength channel of the wavelength-division-multiplexed optical channels traveling through the first optical path in the second direction to cross into the second optical path and travel therein in the second direction.

In some embodiments of the above apparatus, the selected first wavelength channel has a bandwidth between 500 GHz and 10 GHz.

In some embodiments of any of the above apparatus, the wavelength-selective optical pathway is configured to substantially prevent light outside the selected first wavelength channel from being coupled therethrough between the first and second optical paths. Herein, the term "substantially prevent" should be interpreted to mean an optical-power attenuation of at least 10 dB.

In some embodiments of any of the above apparatus, the wavelength-selective optical pathway is connected between an optical output port (e.g., **462ₐ,** FIG. 4) of the first optical amplifier and an optical input port (e.g., **458_{b},** FIG. 4) of the second optical amplifier.

In some embodiments of any of the above apparatus, the wavelength-selective optical pathway comprises at least one of: a wavelength-drop demultiplexer (e.g., **320ₖ,**

FIG. 4) configured drop a portion of backscattered light from the first optical path on the selected first wavelength channel; and a wavelength-add multiplexer (e.g., **340ₖ,** FIG. 4) configured to add light of the dropped portion to the second optical path to travel in the second direction therein.

In some embodiments of any of the above apparatus, the wavelength-selective optical pathway comprises an optical circulator (e.g., **620, 640,** FIGs. 6A-6B).

In some embodiments of any of the above apparatus, the wavelength-selective optical pathway comprises an optical circulator (e.g., **640,** FIG. 6B) optically coupled to a fiber Bragg grating (e.g., **642ₖ,** FIG. 6B) configured to selectively reflect light within the selected first wavelength channel.

In some embodiments of any of the above apparatus, the first optical repeater further comprises at least one of: a supervisory optical circuit (e.g., **400,** FIG. 5) connected to route light of first and second supervisory wavelengths (e.g., λ_{K+1}, λ_{K+2}, FIG. 5) between the first and second optical paths, the first and second supervisory wavelengths being outside the selected first wavelength channel; and a broadband, high-loss optical loopback pathway (e.g., **512** or **516,** FIG. 5) between the first and second optical paths. Herein, the term "broadband" should be interpreted to mean a spectral bandwidth greater than 500 GHz. The term "high-loss" should be interpreted to mean an optical-power attenuation of at least 10 dB.

In some embodiments of any of the above apparatus, the apparatus further comprises: a segment (e.g., **40,** FIG. 8) of a fiber-optic cable, the segment including first and second optical fibers (e.g., **40ⱼₐ, 40_{jb}**, FIG. 4), the first optical fiber being end-connected to the first optical path of the first optical repeater, the second optical fiber being end-connected to the second optical path of the first optical repeater; terminal equipment (e.g., **102₁,** FIG. 8; 20, FIG. 1) optically connected to transmit wavelength-division-multiplexed optical data signals on other channels through the first optical fiber and to receive wavelength-division-multiplexed optical data signals of the other channels through the second optical fiber; and a plurality of optical fiber interrogators (e.g., **22ₖ,** FIG. 2), each of the optical fiber interrogators to transmit a respective optical probe signal (e.g., **242,** FIG. 2) through the segment and to receive a corresponding backscattered optical response signal (e.g., **258,** FIG. 2) through the segment on a corresponding channel of the wavelength-division-multiplexed optical channels.

In some embodiments of any of the above apparatus, the apparatus further comprises a second optical repeater (e.g., **50₂,** FIG. 3); wherein the segment of the fiber-optic cable is end-connected between the first and second optical repeaters; and wherein the second optical repeater comprises: a third optical amplifier (e.g., **60₂ₐ,** FIG. 3) in a first optical path through the second optical repeater to amplify optical signals transmitted in the first direction; a fourth optical amplifier (e.g., **60_{2b}**, FIG. 3) in a second optical path through the second optical repeater to amplify optical signals transmitted in the second direction; and a wavelength-selective optical pathway (e.g., **310₃,** FIG. 3) to selectively couple backscattered light of a second wavelength channel of the first optical path through the second optical repeater to the second optical path through the second optical repeater to travel therein in the second direction, the second selected wavelength channel being different from the first selected wavelength channel.

In some embodiments of any of the above apparatus, the segment of the fiber-optic cable (e.g., **730,** FIG. 7) includes third and fourth optical fibers, the third optical fiber being end-connected to the first optical path of the second optical repeater, the fourth optical fiber being end-connected to the second optical path of the second optical repeater.

In some embodiments of any of the above apparatus, the apparatus further comprises: a segment (e.g., **40,** FIG. 8) of a fiber-optic cable, the segment including first and second optical fibers (e.g., **40ⱼₐ, 40_{jb}**, FIG. 4), the first optical fiber being end-connected to the first optical path of the first optical repeater, the second optical fiber being end-connected to the second optical path of the first optical repeater; and a plurality of optical fiber interrogators (e.g., **22ₖ,** FIG. 2), each of the optical fiber interrogators to transmit a respective optical probe signal (e.g., **242,** FIG. 2) through the segment and to receive a corresponding backscattered optical response signal (e.g., **258,** FIG. 2) through the segment on a corresponding channel of the wavelength-division-multiplexed optical channels.

In some embodiments of any of the above apparatus, the first optical repeater (e.g., **50ⱼ**, FIG. 9) further comprises a second wavelength-selective optical pathway (e.g., **310ₘ,** FIG. 9) between the first and second optical paths to enable light of a selected second wavelength channel of the wavelength-division-multiplexed optical channels traveling through the second optical path in the first direction to cross into the first optical path and travel therein in the first direction.

According to another example embodiment disclosed above, e.g., in the summary section and/or in reference to any one or any combination of some or all of FIGs. 1-9, provided is an apparatus, comprising: a plurality of optical fiber interrogators (e.g., **22ₖ,** FIG. 2), each of the optical fiber interrogators to transmit a respective optical probe signal (e.g., **242,** FIG. 2) through a segment of a fiber-optic cable and to receive a corresponding backscattered optical response signal (e.g., **258,** FIG. 2) through the segment, both the respective optical probe signal and the corresponding backscattered optical response signal being on a respective channel of a plurality of wavelength-division-multiplexed optical channels; and an optical repeater (e.g., **50ⱼ**, FIG. 4) that comprises: a first optical amplifier (e.g., **60ⱼₐ**, FIG. 4) in a first optical path through the optical repeater to amplify the wavelength-division-multiplexed optical channels transmitted in a first direction, the first optical path being end-connected to a first optical fiber of the segment; a second optical amplifier (e.g., **60_{jb}** FIG. 4) in a second optical path through the optical repeater to amplify the wavelength-division-multiplexed optical channels transmitted in a second direction, the second optical path being end-connected to a second optical fiber of the segment, the second direction being opposite to the first direction; and a wavelength-selective optical pathway (e.g., **310ₖ**, FIG. 4) between the first and second optical paths to enable light of a selected first wavelength channel of the wavelength-division-multiplexed optical channels traveling through the first optical path in the second direction to cross into the second optical path and travel therein in the second direction.

In some embodiments of the above apparatus, the apparatus further comprises a second optical repeater (e.g., **50₂,** FIG. 3); wherein the segment of the fiber-optic cable is end-connected between the first and second optical repeaters; and wherein the second optical repeater comprises: a third optical amplifier (e.g., **60₂ₐ**, FIG. 3) in a first optical path through the second optical repeater to amplify the wavelength-division-multiplexed optical channels transmitted in the first direction; a fourth optical amplifier (e.g., **60_{2b}**, FIG. 3) in a second optical path through the second optical repeater to amplify the wavelength-division-multiplexed optical channels transmitted in the second direction; and a second wavelength-selective optical pathway (e.g., **310₃**, FIG. 3) between the first and second optical paths of the second optical repeater to enable light of a selected second wavelength channel of the wavelength-division-multiplexed optical channels traveling through the first optical path of the second optical repeater in the second direction to cross into the second optical path of the second optical repeater and travel therein in the second direction.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Unless otherwise specified herein, in addition to its plain meaning, the conjunction "if' may also or alternatively be construed to mean "when" or "upon" or "in response to determining" or "in response to detecting," which construal may depend on the corresponding specific context. For example, the phrase "if it is determined" or "if [a stated condition] is detected" may be construed to mean "upon determining" or "in response to determining" or "upon detecting [the stated condition or event]" or "in response to detecting [the stated condition or event]."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The description and drawings merely illustrate the principles of the disclosure. It will thus be appreciated that those of ordinary skill in the art will be able to devise various arrangements that, although not explicitly described or shown herein, embody the principles of the disclosure and are included within its scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

As used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

"SUMMARY OF SOME SPECIFIC EMBODIMENTS" in this specification is intended to introduce some example embodiments, with additional embodiments being described in "DETAILED DESCRIPTION" and/or in reference to one or more drawings. "SUMMARY OF SOME SPECIFIC EMBODIMENTS" is not intended to identify essential elements or features of the claimed subject matter, nor is it intended to limit the scope of the claimed subject matter.

## Claims

1. An apparatus, comprising a first optical repeater (50ⱼ) that comprises:
a first optical amplifier (60ⱼₐ) in a first optical path through the first optical repeater to amplify wavelength-division-multiplexed optical channels transmitted in a first direction;
a second optical amplifier (60_{jb}) in a second optical path through the first optical repeater to amplify wavelength-division-multiplexed optical channels transmitted in a second direction, the second direction being opposite to the first direction; and
a wavelength-selective optical pathway (310ₖ) between the first and second optical paths to enable light of a selected first wavelength channel of the wavelength-division-multiplexed optical channels traveling through the first optical path in the second direction to cross into the second optical path and travel therein in the second direction.

2. The apparatus of claim 1, wherein the selected first wavelength channel has a bandwidth between 500 GHz and 10 GHz.

3. The apparatus of claim 1 or 2, wherein the wavelength-selective optical pathway is configured to substantially prevent light outside the selected first wavelength channel from being coupled therethrough between the first and second optical paths.

4. The apparatus of claim 1, 2, or 3, wherein the wavelength-selective optical pathway is connected between an optical output port (462ₐ) of the first optical amplifier and an optical input port (458_{b}) of the second optical amplifier.

5. The apparatus of claim 1, 2, 3, or 4, wherein the wavelength-selective optical pathway comprises at least one of:
a wavelength-drop demultiplexer (320ₖ) configured to drop a portion of backscattered light from the first optical path on the selected first wavelength channel; and
a wavelength-add multiplexer (340ₖ) configured to add light of the dropped portion to the second optical path to travel in the second direction therein.

6. The apparatus of claim 5, wherein the wavelength-selective optical pathway comprises an optical circulator (620, 640).

7. The apparatus of claim 5, wherein the wavelength-selective optical pathway comprises an optical circulator (640) optically coupled to a fiber Bragg grating (642ₖ) configured to selectively reflect light within the selected first wavelength channel.

8. The apparatus of claim 1, wherein the first optical repeater further comprises at least one of:
a supervisory optical circuit (400) connected to route light of first and second supervisory wavelengths between the first and second optical paths, the first and second supervisory wavelengths being outside the selected first wavelength channel; and
a broadband, high-loss optical loopback pathway (512) between the first and second optical paths.

9. The apparatus of claim 1, further comprising:
a segment (40) of a fiber-optic cable, the segment including first and second optical fibers (40ⱼₐ, 40_{jb}), the first optical fiber being end-connected to the first optical path of the first optical repeater, the second optical fiber being end-connected to the second optical path of the first optical repeater;
terminal equipment (102₁) optically connected to transmit wavelength-division-multiplexed optical data signals on other channels through the first optical fiber and to receive wavelength-division-multiplexed optical data signals of the other channels through the second optical fiber; and
a plurality of optical fiber interrogators (22ₖ), each of the optical fiber interrogators to transmit a respective optical probe signal (242) through the segment and to receive a corresponding backscattered optical response signal (258) through the segment on a corresponding channel of the wavelength-division-multiplexed optical channels.

10. The apparatus of claim 9, further comprising a second optical repeater (50₂); wherein the segment of the fiber-optic cable is end-connected between the first and second optical repeaters; and
wherein the second optical repeater comprises:
a third optical amplifier (60₂ₐ) in a first optical path through the second optical repeater to amplify optical signals transmitted in the first direction;
a fourth optical amplifier (60_{2b}) in a second optical path through the second optical repeater to amplify optical signals transmitted in the second direction; and
a wavelength-selective optical pathway (310₃) to selectively couple backscattered light of a second wavelength channel of the first optical path through the second optical repeater to the second optical path through the second optical repeater to travel therein in the second direction, the second selected wavelength channel being different from the first selected wavelength channel.

11. The apparatus of claim 10, wherein the segment of the fiber-optic cable (730) includes third and fourth optical fibers, the third optical fiber being end-connected to the first optical path of the second optical repeater, the fourth optical fiber being end-connected to the second optical path of the second optical repeater.

12. The apparatus of claim 1, further comprising:
a segment (40) of a fiber-optic cable, the segment including first and second optical fibers (40ⱼₐ, 40_{jb}), the first optical fiber being end-connected to the first optical path of the first optical repeater, the second optical fiber being end-connected to the second optical path of the first optical repeater; and
a plurality of optical fiber interrogators (22ₖ), each of the optical fiber interrogators to transmit a respective optical probe signal (242) through the segment and to receive a corresponding backscattered optical response signal (258) through the segment on a corresponding channel of the wavelength-division-multiplexed optical channels.

13. The apparatus of claim 1, wherein the first optical repeater (50ⱼ) further comprises a second wavelength-selective optical pathway (310ₘ) between the first and second optical paths to enable light of a selected second wavelength channel of the wavelength-division-multiplexed optical channels traveling through the second optical path in the first direction to cross into the first optical path and travel therein in the first direction.

14. An apparatus, comprising:
a plurality of optical fiber interrogators (22ₖ), each of the optical fiber interrogators to transmit a respective optical probe signal (242) through a segment of a fiber-optic cable and to receive a corresponding backscattered optical response signal (258) through the segment, both the respective optical probe signal and the corresponding backscattered optical response signal being on a respective optical channel of a plurality of wavelength-division-multiplexed optical channels; and
an optical repeater (50ⱼ) that comprises:
a first optical amplifier (60ⱼₐ) in a first optical path through the optical repeater to amplify the wavelength-division-multiplexed optical channels transmitted in a first direction, the first optical path being end-connected to a first optical fiber of the segment;
a second optical amplifier (60_{jb}) in a second optical path through the optical repeater to amplify the wavelength-division-multiplexed optical channels transmitted in a second direction, the second optical path being end-connected to a second optical fiber of the segment, the second direction being opposite to the first direction; and
a wavelength-selective optical pathway (310ₖ) between the first and second optical paths to enable light of a selected first wavelength channel of the wavelength-division-multiplexed optical channels traveling through the first optical path in the second direction to cross into the second optical path and travel therein in the second direction.

15. The apparatus of claim 14, further comprising a second optical repeater (50₂); wherein the segment of the fiber-optic cable is end-connected between the first and second optical repeaters; and
wherein the second optical repeater comprises:
a third optical amplifier (60₂ₐ) in a first optical path through the second optical repeater to amplify the wavelength-division-multiplexed optical channels transmitted in the first direction;
a fourth optical amplifier (60_{2b}) in a second optical path through the second optical repeater to amplify the wavelength-division-multiplexed optical channels transmitted in the second direction; and
a second wavelength-selective optical pathway (310₃) between the first and second optical paths of the second optical repeater to enable light of a selected second wavelength channel of the wavelength-division-multiplexed optical channels traveling through the first optical path of the second optical repeater in the second direction to cross into the second optical path of the second optical repeater and travel therein in the second direction.
